Europäisches Patentamt

European Patent Office

Office européen des brevets

(19)

(11) Veröffentlichungsnummer: **0 392 288**
**A2**

(12) **EUROPÄISCHE PATENTANMELDUNG**

(21) Anmeldenummer: **90106118.4**

(22) Anmeldetag: **30.03.90**

(51) Int. Cl.⁵: **A01C 17/00**

(30) Priorität: **08.04.89 DE 3911582**
**08.04.89 DE 3911583**
**06.10.89 DE 3933344**

(43) Veröffentlichungstag der Anmeldung:
**17.10.90 Patentblatt 90/42**

(84) Benannte Vertragsstaaten:
**DE FR GB NL**

(71) Anmelder: **Amazonen-Werke H. Dreyer GmbH
& Co. KG
Am Amazonenwerk 9-13
D-4507 Hasbergen-Gaste(DE)**

(72) Erfinder: **Dreyer, Heinz, Dr., Dipl.-Ing.
Am Amazonenwerk 7
D-4507 Hasbergen(DE)**
Erfinder: **Scheufler, Bernd, Dr.
Am Amazonenwerk 101
D-4507 Hasbergen(DE)**

(54) **Schleuderdüngerstreuer.**

(57) Schleuderdüngerstreuer mit Vorratsbehälter, in dessen unteren Bereich mehrere Dosierorgane angeordnet sind, unter denen sich zumindest zwei oder mehrere gradzahlige rotierend angetriebene Schleuderscheiben mit Wurfschaufeln befinden, denen von den Dosierorganen die sich im Vorratsbehälter befindlichen Düngemittelpartikel in vorbestimmter und einstellbarer Weise auf zumindest zwei vorbestimmte Stellen (sog. Aufgabepunkten) pro Scheibe aufgegeben werden. Um mit einfachsten Maßnahmen die Möglichkeit zu schaffen, daß Streubild zu korrigieren, ist vorgesehen, daß die Lage und Zuordnung der mehreren, einer Scheibe zugeordneten Aufgabepunkte zueinander veränderbar und unabhängig voneinander einstellbar ist.

FIG. 2

## Schleuderdüngerstreuer

Die Erfindung betrifft einen Schleuderdüngerstreuer gemäß Oberbegriff des Patentanspruches 1.

.Ein derartiger Schleuderdüngerstreuer ist beispielsweise durch die deutsche Offenlegungsschrift 15 82 091 bekannt. Dieser Schleuderdüngerstreuer weist einen Vorratsbehälter auf, unter dessen unteren Bereich zwei Schleuderscheiben nebeneinander angeordnet sind. Jeder Schleuderscheibe sind zwei in den Boden des Vorratsbehälters angeordnete Dosierorgane zugeordnet, die als Auslauföffnungen ausgebildet sind, durch welche der Dünger den Schleuderscheiben auf vorbestimmten Aufgabepunkten zugeführt wird. Über diese beiden Auslauföffnungen werden jeder Schleuderscheibe die sich im Vorratsbehälter befindlichen Düngemittelpartikel im vorbestimmter und einstellbarer Weise zugeführt, wobei die Düngemittelpartikel jeweils auf zwei Aufgabepunkten jeder Schleuderscheibe aufgegeben werden. Die den Schleuderscheiben zugeordneten Auslauföffnungen werden über miteinander gekoppelte Gestänge, der sog. Streumengeneinstellvorrichtung, gleichzeitig und in gleicher Weise zur Veränderung der auszubringenden Streugutmenge verstellt. Die Koppelung der den Dosierorganen zugeordneten Gestänge zu der gemeinsamen Streumengeneinstellvorrichtung bewirkt, daß die Dosierorgane jeder Schleuderscheibe im Sinne einer übereinstimmenden Vergrößerung bzw. Verkleinerung der Bei diesem bekannten Schleuderdüngerstreuer werden die Schleuderscheiben gegenläufig rotierend angetrieben und weisen ein symmetrisches Streubild auf. Da aber die von den Schleuderscheiben erzeugten Streusektoren in Abhängigkeit von der eingestellten Streumenge oder auch bei einer anderen Streugutart insgesamt wandern können oder sich die Verteilung der in jedem Sektor abgeworfenen Streugutmengen ändern kann, sind Vorkehrungen für die Einstellung der Richtung der Streusektroen der Schleuderscheiben vorgesehen. Mittels dieser Vorkehrungen, die darin bestehen, daß die Streumengeneinstellvorrichtung beweglich und feststellbar an dem Rahmen des Schleuderdüngerstreuers gelagert ist, kann die Lage der Auslauföffnungen gegenüber den Schleuderscheiben über ein Gestänge gleichzeitig und in gleicher Weise zur Veränderung des Streubildes verstellt werden.

Es ist mit Hilfe der Verstellung der Aufgabepunkte der Düngemittelpartikel auf der Schleuderscheibe möglich, das Streubild zu beeinflussen, indem die Lage der Streusektoren verschwenkbar ist. Insbesondere soll dadurch erreicht werden, daß ein möglichst gleichmäßiges Streubild über die gesamte zu bestreuende Fläche erzielt wird.

Versuche haben jedoch nun ergeben, daß diese gemeinsame Verschwenkung der Dosieröffnungen gegenüber den Schleuderscheiben, d.h. eine gleichzeitige Veränderung sämtlicher Aufgabepunkte nicht immer wünschenswert und auch nicht ausreichend ist.

Der Erfindung liegt daher die Aufgabe zugrunde, mit einfachsten Maßnahmen die Möglichkeit zu schaffen, daß Streubild zu korrigieren.

Diese Aufgabe wird erfindungsgemäß durch die Maßnahme gemäß des Kennzeichens des Patentanspruches 1 gelöst. Infolge dieser Maßnahme ist es auf einfachste Weise möglich, durch Verschieben der Aufgabepunkte auf der Schleuderscheibe das Streubild zu korrigieren. Hierbei ist es erstmalig möglich geworden, den einen Aufgabepunkt anders oder mehr als den anderen Aufgabepunkt je Scheibe zu verstellen, so daß sich alle Aufgabepunkte sehr individuell und unabhängig voneinander ein- und verstellen lassen. Hierdurch ist es beispielsweise möglich, wenn zuviel Dünger in den Außen-oder Innenbereich des Streubereiches des Schleuderdüngerstreuers geworfen wird, den für diesen Streubereich zuständigen Aufgabepunkt entsprechend auf der Scheibe zu verlagern. Hierzu ist die Lage und Zuordnung der Dosierorgane zueinander in unabhängiger Weise voneinander verstellbar.

In einer Weiterbildung der Erfindung ist vorgesehen, daß jeder Schleuderscheibe zumindest zwei Dosierorgane zugeordnet sind, deren Lage zueinander sowie die von ihnen dosierte Düngermenge unabhängig voneinander einstellbar ist. Infolge dieser Maßnahmen gibt es noch mehr Variationsmöglichkeiten um das Streubild zu korrigieren und zu optimieren, so daß eine gleichmäßige Düngerverteilung in gewünschter Weise über die gewünschte Arbeitsbreite des Schleuderdüngestreuers möglich ist. Beispielsweise kann durch die Reduzierung oder die Erhöhung der von den Dosierorganen ausgebrachten Düngermenge eine Streubildkorrektur durchgeführt werden, indem beispielsweise dem Aufgabepunkt, der für die Düngeranhäufung oder Düngerminderstelle verantwortlich ist, mehr oder weniger Dünger zugeführt wird. Eine weitere Korrektur und Verlagerung von Düngeranhäufung bzw. Reduzierung ist durch die Lageänderung der Auslauföffnungen derDosierorgane und somit die Veränderung der Aufgabepunkte des Düngers gegenüber den Schleuderscheiben möglich. Hierbei erfolgt gegenüber dem bekannten Schleuderdüngerstreuer, bei dem beim Verschwenken der Streumengeneinstellvorrichtung eine gemeinsame Winkelverschiebung der Streusektoren beider Schleuderscheiben erfolgt, eine Beeinflussung der Streusektoren der Schleuderscheiben in unabhäniger Weise voneinander, so daß eine sehr individuelle Streubildkorrektur für die einzelnen Streubereiche innerhalb des Streubildes erfolgen kann.

In einer bevorzugten Ausführungsform ist vorgesehen, daß die Dosierorgane als im unteren Bereich bzw. Behälterboden des Behälters angeordnete und über Schieber in ihrer Öffnungsweite einstellbare Auslauföffnungen sind. Hierdurch kann in äußerst einfacher Weise die Lage der Aufgabepunkte unabhängig voneinander verändert werden. Auch ist es möglich, die Ausbringmenge je Auslauföffnung zu verändern, und zwar unabhängig voneinander, so daß über die eine Auslauföffnung mehr Dünger als über die andere Auslauföffnung der Schleuderscheibe zugeführt werden kann. Weiterhin ist es möglich, eine der Dosieröffnungen bei dem Ausbringen von kleinsten Mengen zu schließen, so daß dann wieder die andere Auslauföffnung einen größeren Querschnitt aufweisen kann, als wenn beide Auslauföffnungen geöffnet wären. Hierdurch werden Verstopfungen der Auslauföffnungen bei dem Ausbringen von kleinen Düngermengen pro Flächeneinheit in äußerst einfacher Weise vermieden.

In bevorzugter Weise sind die Auslauföffnungen in unterhalb des Behälterbodens gegenüber dem Behälterboden verschieb-oder verschwenkbare plattenförmige Elemente angeordnet, welche unabhängig voneinander einstellbar und/oder verstellbar sind. Hierbei können an den plattenförmigen Elementen, in denen die Auslauföffnungen angeordnet sind, die die Öffnungsweite der Auslauföffnungen bestimmenden, sowie diese verschließenden Schieber angeordnet sein. Hierdurch ergibt sich eine kompakte und einfach zu handhabende Baueinheit von Schieber und plattenförmigen Elementen. Diese Dosierorgane werden also zu einem Element zusammengefaßt.

Des weiteren sieht die Erfindung vor, daß die Wurfschaufeln auf den Schleuderscheiben winkelverschwenkbar und in unterschiedlichen Stellungen feststellbar angeordnet sind. Infolge dieser Maßnahmen ist auch eine Streubildkorrektur über die Verstellung der Wurfschaufeln auf den Schleuderscheiben erreichbar.

In einer weiteren Ausführungsform ist erfindungsgemäß vorgesehen, daß jeweils unterhalb der Auslauföffnungen Auslaufrutschen oder -trichter oder ähnliches angeordnet sind, und daß die Abgabeenden dieser Elemente unabhängig voneinander gegenüber der Schleuderscheibe in horizontaler Ebene verstellbar sind. Durch die Anordnung von verstellbaren Laufrutschen oder -trichter unterhalb der Auslauföffnungen ist es ebenfalls möglich, die Lage und Zuordnung der mehreren, einer Schleuderscheibe zugeordneten Aufgabepunkte zueinander zu verändern und unabhängig voneinander einzustellen. Die Aufgabepunkte der den Schleuderscheibe zugeführten Düngemittelpartikeln lassen sich somit auf der Schleuderscheibe verschieben, so daß es hierdurch ebenfalls auch möglich ist, das von den Schleuderscheiben durch die abgeschleuderten Düngemittelpartikel erzeugte Streubild zu korrigieren. Hierbei ist es ebenfalls möglich, den einen Aufgabepunkt anders oder mehr als den anderen Aufgabepunkt je Schleuderscheibe zu verstellen, so daß sich alle Aufgabepunkte sehr individuell und unabhängig voneinander ein- und verstellen lassen. So ist es beispielsweise möglich, wenn zuviel Dünger in den Außen- oder Innenbereich des Streubereiches des Schleuderdüngerstreuers geworfen wird, den für diesen Streubereich zuständigen Aufgabepunkt durch eine entsprechende Verlagerung der diesem Aufgabepunkt zugeordneten Auslaufrutsche oder -trichter auf der Schleuderscheibe zu verlagern. Hierbei ist dann die Lage und Zuordnung der Auslaufrutschen oder -trichter zueinander in unabhängiger Weise voneinander verstellbar.

Zur einfacheren Einstellung dieser Auslaufrutschen oder -trichter sind diese Bauteile anhand von Skalen oder Markierungen oder ähnlichem einstellbar.

Zur Einstellung unterschiedlicher Ausbringmengen sowie zur Beeinflussung des von den Schleuderscheiben durch die von den Wurfschaufeln abgeschleuderten Düngemittelpartikel erzeugten Streubilder ist erfindungsgemäß vorgesehen, daß jeder Auslauföffnung ein Schieber zugeordnet ist, daß die jeder Auslauföffnung zugeordneten Schieber unabhängig voneinander verstellbar sind, um so die Aufgabemenge je Aufgabepunkt unabhängig voneinander variieren zu können. Hierbei ist dann erfindungsgemäß vorgesehen, daß die einer Schleuderscheibe zugeordneten Schieber in Abhängigkeit derart voneinander verstellbar sind, daß die Größe der Auslauföffnungen unterschiedlich einzustellen ist, wobei jedoch bei der Verstellung der Schieber die Summe der an sich vorgesehenen Ausbringmenge bzw. die Summe des freigegebenen Querschnittes gleich der Summe des Querschnitte bei gleichgroßer Einstellung der Auslauföffnungen ist. Hierdurch soll erreicht werden, daß bei einer Streubildkorrektur zu der die Öffnungsweiten der Auslauföffnungen unterschiedlich erstellt werden, d.h. den einzelnen Aufgabepunkten unterschiedliche Düngermengen zugeführt werden, sich die Ausbringmenge pro Flächeneinheit nicht verändern. Es erfolgt also eine Verstellung der Auslauföffnungen mittels der Schieber in der Weise, daß beispielsweise eine Reduzierung der Ausbringmenge der einen Auslauföffnung zu einer Erhöhung der Ausbringmenge um die Menge der Reduzierung der anderen Auslauföffnung erfolgt, so daß die gesamte Ausbringmenge pro Flächeneinheit unverändert bleibt.

In einem anderen Ausführungsbeispiel zur unabhängigen Verstellung der einer Schleuderscheibe zugeordneten Aufgabepunkte ist erfindungsgemäß vorgesehen, daß die Auslauföffnungen in dem Boden des Vorratsbehälters gegenüber der Drehachse der Schleuderscheibe bzw. den Schleuderscheiben verstellbar sowie die Auslauföffnungen zueinander verstellbar und in unterschiedlichen Positionen zueinander einstellbar sind.

In einer weiteren Ausführungsform ist erfindungsgemäß vorgesehen, daß die Schleuderscheiben jeweils gegenüber der Auslauföffnungen in horizontaler Ebene in zwei sich überlagernden Bewegungsrichtungen verstellbar sind. Hierdurch ist es ebenfalls möglich, eine Veränderung der Düngeraufgabepunkte des aus dem Vorratsbehälter herausrieselnden Dünger auf die Schleuderscheiben vorzunehmen, wobei hier nun die Aufgabepunkte des Düngers auf den Schleuderscheiben durch eine Verstellung der Schleuderscheibe gegenüber den im Vorratsbehälterboden angeordneten Auslauföffnungen erfolgt. Hierbei ist dann erfindungsgemäß vorgesehen, daß das Getriebe der Schleuderscheibe bzw. die Lagerung der Schleuderscheiben mittels eines Kniehebelgelenkes am Rahmen des Schleuderdüngerstreuers befestigt ist. Somit sind also Lagerung oder das Getriebe der Schleuderscheibe in X- und Y-Richtung in horizontaler Ebene verstellbar am Rahmen des Schleuderdüngerstreuers angeordnet.

Infolge der Maßnahme gemäß Anspruch 20 wird eine weitere Möglichkeit aufgezeigt, durch Verschieben der Aufgabeflächen der Düngemittelpartikel auf der Schleuderscheibe das Streubild zu korrigieren.

In besonders bevorzugter Weise ist erfindungsgemäß vorgesehen, daß die Lage der in der gemeinsamen Platte angeordneten Auslauföffnungen gleichzeitig, aber in unterschiedlicher Weise in Bezug auf die Drehachse der Schleuderscheibe verstellbar ist. Hierdurch ist es möglich, die eine Aufgabefläche anders oder mehr als die andere Aufgabefläche, durch die jeweilige Lage der entsprechenden Auslauföffnungen zur Drehachse der Schleuderscheibe, zu verstellen. Die Aufgabeflächen lassen sich also sehr individuell und unabhängig voneinander ein- und verstellen. Es ist beispielsweise möglich, wenn zuviel Dünger in den Außen- oder Innenbereich des Streubereiches des Schleuderdüngerstreuers geworfen wird, die Aufgabeflächen der in der gemeinsamen Platte angeordneten Auslauföffnungen in ihrer Lage zur Drehachse der Schleuderscheibe derart zu verlagern, daß die für diesen Streubereich zuständige Aufgabefläche entsprechend auf der Schleuderscheibe verstellt wird, so daß das Streubild korrigiert wird und eine gleichmäßige Düngerverteilung über die gewünschte Arbeitsbreite des Schleuderdüngerstreuers möglich ist. Beispielsweise kann durch die Reduzierung oder die Erhöhung der aus den Auslauföffnungen dosierten Düngermenge eine Streubildkorrektur durchgeführt werden, in dem beispielsweise der Aufgabefläche, die für die Düngeranhäufung oder Düngerminderstelle verantwortlich ist, mehr oder weniger Dünger zugeführt wird. Die Ausbringmenge je Auslauföffnung läßt sich also unabhängig voneinander verändern. Weiterhin ist es auch möglich, eine der Auslauföffnungen beim Ausbringen von kleinsten Mengen zu schließen, so daß dann wieder die andere Auslauföffnung einen größeren Querschnitt aufweisen kann, als wenn beide Auslauföffnungen geöffnet wären. Hierdurch werden Verstopfungen der Auslauföffnungen bei dem Ausbringen von kleinen Düngermengen pro Flächeneinheit auf äußerst einfache Weise vermieden.

In einer erfindungsgemäßen Ausführungsform ist vorgesehen, daß die Platte, auf der die Auslauföffnungen angeordnet sind, gelenkig über einen oder mehrere Hebel am Maschinenrahmen befestigt ist, wobei die Hebel gemeinsam mit der Platte gegenüber dem Behälterboden verstellbar sind. Hierdurch lassen sich die einer Schleuderscheibe zugeordneten Düngeraufgabeflächen gleichzeitig sowohl gleichartig als auch unabhängig voneinander verstellen, so daß eine sehr individuelle Streubildkorrektur für die einzelnen Streubereiche innerhalb eines Streubildes erfolgen kann.

Ein derartig ausgebildeter Schleuderdüngerstreuer ist bereits durch die deutsche Offenlegungsschrift 15 82 091 bekannt. Dieser Schleuderdüngerstreuer weist einen Vorratsbehälter auf, unter dessen unteren Bereich zwei Schleuderscheiben nebeneinander angeordnet sind. Jeder Schleuderscheibe sind zwei in den Boden des Vorratsbehälters angeordnete Dosierorgane zugeordnet, die als Auslauföffnungen ausgebildet sind, durch welche der Dünger den Schleuderscheiben auf vorbestimmten Aufgabeflächen zugeführt wird. Über diese Auslauföffnungen werden jeder Schleuderscheibe die sich im Vorratsbehälter befindlichen Düngemittelpartikel in .vorbestimmter und einstellbarer Weise zugeführt, wobei die Düngemittelpartikel jeweils auf zwei Aufgabeflächen je Schleuderscheibe aufgegeben werden. Die den Schleuderscheiben zugeordneten Auslauföffnungen werden über miteinander gekoppelte Gestänge, der sogenannten Streumengeneinstellvorrichtung, gleichzeitig und in gleicher Weise zur Veränderung der auszubringenden Streugutmenge verstellt. Die Koppelung der den Dosierorganen zugeordneten Gestänge zu der gemeinsamen Streumengeneinstellvorrichtung bewirkt, daß die Dosierorgane jeder Schleuderscheibe im Sinne einer übereinstimmenden Vergrößerung bzw. Verkleinerung der Abgabemengen gemeinsam verstellt werden.

Bei diesem bekannten Schleuderdüngerstreuer werden die Schleuderscheiben gegenläufig rotierend angetrieben und weisen ein symmetrisches Streubild auf. Da aber die von den Schleuderscheiben erzeugten Streusektoren in Abhängigkeit der eingestellten Streumenge oder auch bei einer anderen Streugutart insgesamt wandern können oder sich die Verteilung der in jedem Sektor abgeworfenen Streugutmengen ändern kann, sind Vorkehrungen für die Einstellung der Richtung der Streusektoren der Schleuderscheibe vorgesehen. Mittels dieser Vorkehrungen, die darin bestehen, daß die Streumengeneinstellvorrichtung beweglich und feststellbar an dem Rahmen des Schleuderdüngerstreuers gelagert ist, kann die Lage der Auslauföffnungen gegenüber den Schleuderscheiben über ein Gestänge gleichzeitig und in gleicher Weise zur Veränderung des Streubildes - durch Veränderung der Aufgabepunkte - verstellt werden. Bei diesem bekannten Schleuderdüngerstreuer erfolgt beim Verschwenken der Streumengeneinstellvorrichtung eine gemeinsame Winkelverschiebung der Streusektoren beider Schleuderscheiben, eine Beeinflussung der Streusektoren der Schleuderscheiben in unabhängiger Weise voneinander, so daß eine sehr individuelle Streubildkorrektur für die einzelnen Streubereiche innerhalb des Streubildes erfolgen kann, ist nicht möglich. Dieser Nachteil wird durch den in erfindungsgemäßer Weise ausgerüsteten Schleuderdüngerstreuer behoben.

Zur unterschiedlichen Positionierung der Lage der Auslauföffnungen einer Platte gegenüber der Drehachse einer Schleuderscheibe ist erfindungsgemäß vorgesehen, daß die Platte drehbar oder verschwenkbar gegenüber der Drehachse der Schleuderscheibe am Behälterboden befestigt ist.

Damit nun das Ein- und Verstellen der jeweiligen Aufgabeflächen der aus dem Vorratsbehälter in einstellbaren Mengen herausriesenden, den Schleuderscheiben zugeführten Düngemittelpartikel einfach und in fehlerlos wiederholbarer Weise durchgeführt werden kann, ist erfindungsgemäß vorgesehen, daß die Platte, in der die Auslauföffnungen bzw. ein zusätzlicher Schieber vorgesehen ist, über zwei voneinander unabhängige Skalen einstellbar ist, so daß die Lage der Auslauföffnungen in Bezug auf die Schleuderscheibe verstellbar ist. Hierbei ist dann weiterhin vorgesehen, daß die mehreren, jeder Schleuderscheibe zugeordneten Auslauföffnungen gemeinsam verstellbar sind. Bei dieser gemeinsamen Verstellung bleibt gegenüber dem Schleuderdüngerstreuer gemäß der DE-OS 15 82 091 die unabhängige Ein- und Verstellung der Auslauföffnungen einer Schleuderscheibe gewahrt.

Damit nun eine besonders einfache Möglichkeit zum Ein- und Verstellen der Querschnitte der Auslauföffnungen bzw. ein Verstellen der Lage der Aufgabeflächen auf der jeweiligen Schleuderscheibe herbeigeführt werden kann, ist erfindungsgemäß vorgesehen, daß die Verstellung der Auslauföffnungen bzw. die Verstellung der Lage der Aufgabeflächen über eine Fernbedienung erfolgt.

Das Ein- und Verstellen der Auslauföffnungen bzw. der Lage der Aufgabeflächen der den Schleuderscheiben zugeführten Düngemittelpartikel läßt sich mittels der Fernbedienung erfindungsgemäß derart ausführen, daß die Fernbedienung mit einem Computer verbunden ist, welcher die Einstellung sowie das Streuergebnis erfaßt und entsprechend die Einstellung des Schleuderdüngerstreuers regelt. Hierdurch läßt sich die Ein- und Verstellung Größe der der Auslauföffnungen bzw. die Lage der Aufgabeflächen des Düngemittelstromes auf die Schleuderscheiben auf einfachste Weise durchführen, wobei es während des Ausbringvorganges möglich ist, daß eine automatische, selbständige Ein- und Verstellung der Auslauföffnungsquerschnitte sowie der Lage der Aufgabeflächen zur Streubildkorrektur unter Berücksichtigung der jeweiligen Nährstoffversorgung der zu bestreuenden Fläche erfolgt.

Das Verstellen von zwei oder mehreren einer Schleuderscheibe zugeordneten Auslauföffnungen in unabhängiger Weise voneinander, wobei die Aufgabeflächen des Düngers variierbar sind, läßt sich sowohl bei um aufrechte, in bevorzugter Weise senkrechte Achsen rotierende Schleuderscheiben als auch bei um zur Fahrtrichtung nach vorne und um nach innen geneigte Achsen rotierende Schleuderscheiben durchführen.

Weitere Einzelheiten der Erfindung sind der Beispielsbeschreibung und den Zeichnungen zu entnehmen. Hierbei zeigen

Fig. 1 der in erfindungsgemäßer Weise ausgerüstete Schleuderdüngerstreuer in der Ansicht von hinten,

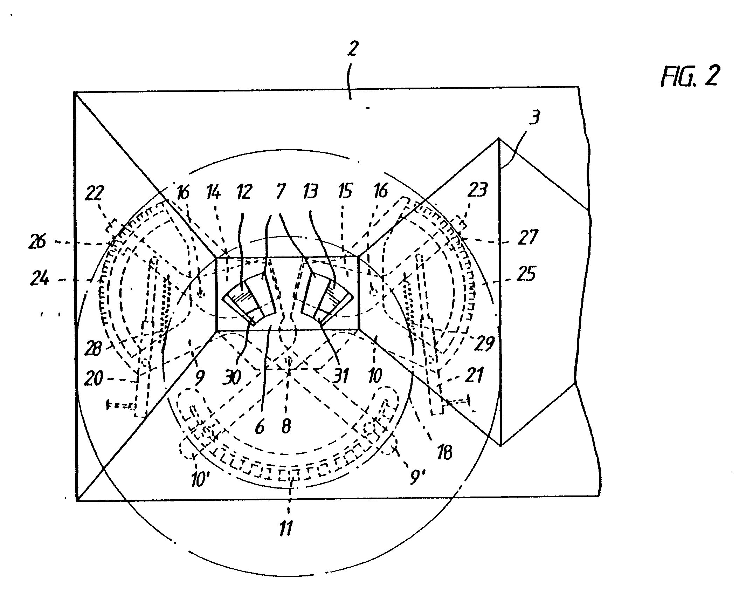

Fig. 2 Teildraufsicht des in erfindungsgemäßer Weise ausgerüsteten Schleuderdüngerstreuers gemäß Fig. 1,

Fig. 3 ein Schleuderscheibenpaar mit winkelverschwenkbaren und in verschiedenen Stellungen feststellbaren Wurfschaufeln in der Draufsicht und in vergrößertem Maßstab,

Fig. 4 ein mehrere Trichterspitzen aufweisender Schleuderdüngerstreuer, wobei unter jeder Trichterspitze eine Schleuderscheibe angeordnet ist in der Ansicht von hinten,

Fig. 5 einen weiteren in erfindungsgemäßer Weise ausgerüsteten Schleuderdüngerstreuer in der Ansicht von hinten,

Fig. 6 eine weitere Möglichkeit zur Streubildkorrektur, indem die Schleuderscheibe gegenüber den Auslauföffnungen verstellt werden,

Fig. 7 ein weiterer, in erfindungsgemäßer Weise mit unter den Auslauföffnungen des Vorratsbehälters angeordneten Auslaufrutschen ausgebildeter Schleuderdüngerstreuer, wobei das Fassungsvermögen des Vorratsbehälters mittels eines Aufsatzbehälters vergrößert ist, in der Ansicht von hinten,

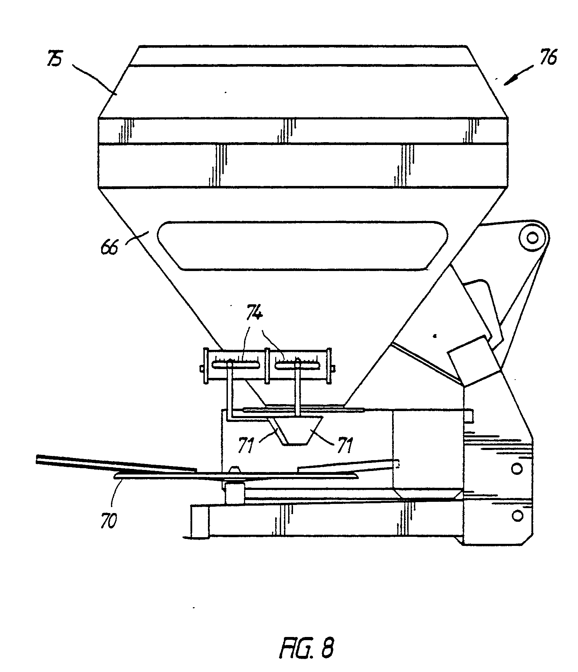

Fig. 8 der Schleuderdüngerstreuer gemäß Fig. 7 in der Seitenansicht,

Fig. 9 ein hinter einem Ackerschlepper angeordneter Schleuderdüngerstreuer, der zur Vergrößerung des Fassungsvermögens seines Vorratsbehälters einen Behälteraufsatz aufweist, in der Seitenansicht,

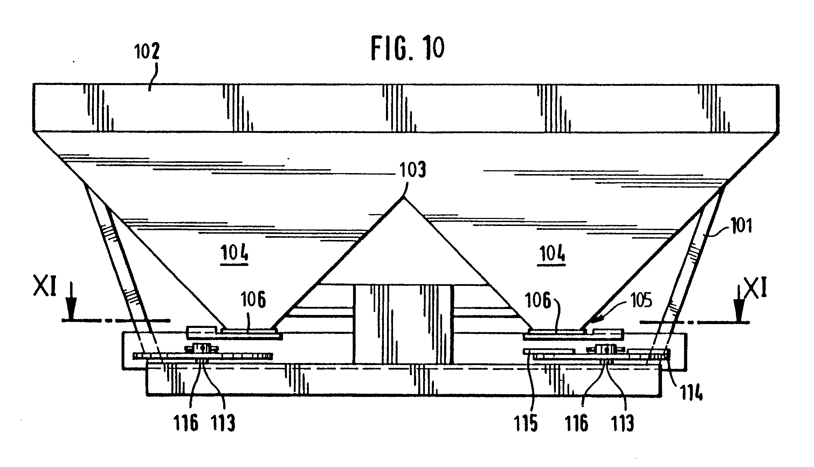

Fig.10 der in erfindungsgemäßer Weise ausgerüstete Schleuderdüngerstreuer in der Ansicht von hinten,

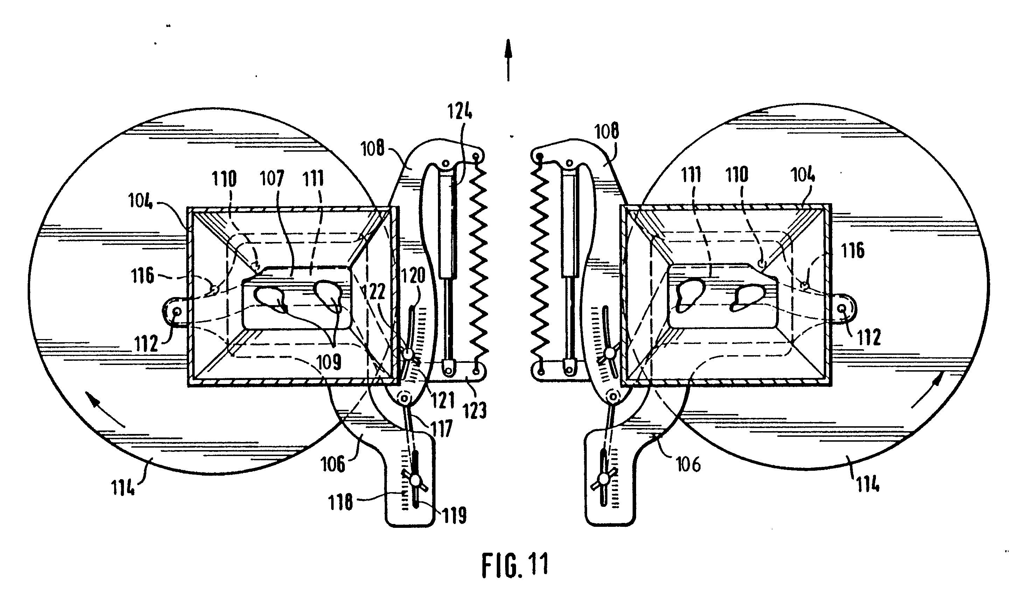

Fig.11 Prinzipdarstellung des Schleuderdüngerstreuers gemäß Fig. 1 in der Ansicht XI - XI,

Fig.12 Prinzipdarstellung der in erfindungsgemäßer Weise ausgerüsteten rechten, unteren Hälfte des Vorratsbehälters und

Fig.13 eine andere Ausführungsform der rechten unteren Vorratsbehälterhälfte in der Draufsicht.

Der Schleuderdüngerstreuer weist einen Rahmen 1 auf, an dem der Vorratsbehälter 2 befestigt ist. Der Vorratsbehälter 2 ist durch das dachförmige Mittelteil 3 derart unterteilt, daß die beiden trichterförmigen Behälterteile 4 entstehen. Im jeweiligen unteren Bereich 5 dieser trichterförmigen Behälterteile 4 ist die Bodenplatte 6 am Trichter befestigt. In diesen Bodenplatten 6 sind jeweils die beiden Auslauföffnungen 7 angeordnet. Unterhalb dieser Bodenplatten 6 befinden sich jeweils die um die aufrechte Achse 8 verschwenkbaren plattenförmigen Elemente 9 und 10. Diese plattenförmigen Elemente 9 und 10 wirken mit der Einstellskala 11 zusammen, so daß sie unabhängig voneinander verstell- und festsetzbar sind. In diesen plattenförmigen Elementen 9 und 10 befinden sich die Auslauföffnungen 12 und 13. Unterhalb dieser Auslauföffnungen 12 und 13 sind die diese Auslauföffnungen 12 und 13 in ihrer Öffnungsweite bestimmenden sowie diese verschließenden Schieber 14 und 15 angeordnet. Diese Schieber 14 und 15 sind jeweils schwenkbar um den Bolzen 16 an den plattenförmigen Elementen 9 und 10 angelenkt.

Die sich im inneren des Vorratsbehälters 2 befindlichen Düngemittelpartikel gelangen jeweils in einstellbaren Mengen über die Auslauföffnungen 12 und 13 zu den unter diesen Auslauföffnungen 12 und 13 drehbar in den Getrieben 17 gelagerten Schleuderscheiben 18. Diese rotierend antreibbaren Schleuderscheiben 18 verteilen die ihnen zudosierten Düngemittelpartikel mittels der auf den Schleuderscheiben 18 angeordneten Wurfschaufeln 19 in exakter Weise über die zu bestreuende Bodenoberfläche. Der Antrieb der Schleuderscheiben 18 erfolgt in bekannter und daher nicht näher dargestellter Weise, beispielsweise mittels einer Gelenkwelle von der Zapfwelle des den Schleuderdüngerstreuer transportierenden Ackerschleppers und über Getriebeanordnungen. Auch können die Schleuderscheiben 18 von Ölmotoren angetrieben werden.

Die die Schieber 14 und 15 betätigenden Betätigungselemente 20 und 21 sind zwischen den Schiebern 14 und 15 und den die Auslauföffnungen 12 und 13 aufweisenden plattenförmigen Elementen 9 und 10 angeordnet. Hierbei wirken die den Schiebern 14 und 15 zugehörigen Einstellhebel 22 und 23 mit der an dem jeweiligen plattenförmigen Element 9 bzw. 10 angeordneten Einstellskala 24 bzw. 25 zusammen. Auf diesen Skalen 24 und 25 sind die in unterschiedlichen Positionen einstellbaren Anschläge 26 und 27 befestigt, an denen die Einstellhebel 22 und 23 der Schieber 14 und 15 zur Anlage kommen. Zwischen den plattenförmigen Elementen 9 und 10 und den Schiebern 14 und 15 ist weiterhin jeweils die Zugfeder 28 bzw. 29 angeordnet. Mittels dieser Zugfeder 28 bzw. 29 werden die Dosierschieber 14 bzw. 15 bis gegen die Anschläge 26 bzw. 27 gezogen, wenn die als Hydraulikzylinder ausgebildeten Betätigungselemente 20 und 21 drucklos geschaltet sind. Werden nun diese als Hydraulikzylinder ausgebildeten Betätigungselemente 20 bzw. 21 mit Hydrauliköl beaufschlagt, wird die Düngemittelzufuhr zu den Schleuderscheiben 18 unterbrochen, indem die Schieber 14 bzw. 15 die Auslauföffnungen 12 und 13 verschließen.

Die Lage der in den plattenförmigen Elementen 9 und 10 angeordneten Auslauföffnungen 12 und 13 läßt sich im Verstellbereich der beiden größeren, in der Bodenplatte 6 sich befindlichen Zulauföffnungen 7 verstellen, so daß die Lage und Zuordnung der beiden, einer Schleuderscheibe 18 zugeordneten Düngeraufgabepunkte zueinander veränderbar und unabhängig voneinander einstellbar ist. Die jeweilige Lage der Auslauföffnungen 12 bzw. 13 gegenüber den Schleuderscheiben 18 läßt sich mittels den mit der Einstellskala 11 zusammenwirkenden Positionshebeln 9' bzw. 10' der plattenförmigen Elemente 9 bzw. 10 in exakter Weise vornehmen, so daß sich die Lage des jeweiligen Aufgabepunktes der Düngemittelpartikel auf der Schleuderscheibe 18 individuell einstellen läßt. Hierbei befindet sich der jeweilige Aufgabepunkt in etwa senkrecht unterhalb des jeweils freigegebenen Öffnungsquerschnittes 30 bzw. 31 der Auslauföffnungen 12 bzw. 13. Durch Verschwenken der mit den Auslauföffnungen 12 bzw. 13 versehenen plattenförmigen Elemente 9 bzw. 10 jeweils um die aufrechte Achse 8, läßt sich die Lage der jeweiligen Auslauföffnung 12 bzw. 13 auf einfachste Weise unabhängig voneinander verstellen. Durch diese Verstellmöglichkeit der Lage der jeweiligen Auslauföffnung 12 bzw. 13 gegenüber den Schleuderscheiben 18 ist es auf einfachste Weise möglich, das Streubild der von den Schleuderscheiben 18 abgeschleuderten Düngemittelpartikel z.B. nur in seinem Innenbereich zu regulieren, ohne den äußeren Bereich zu verändern. Hierdurch entsteht eine wesentlich höhere Einstellgenauigkeit. Die Dosiermengen der beiden Auslauföffnungen 12 bzw. 13 sind unabhängig voneinander einstellbar bzw. ihre Öffnungsquerschnitte sind unabhängig voneinander zu verschließen bzw. zu öffnen. Bei einem Schleuderdüngerstreuer mit zwei Schleuderscheiben 18 lassen sich somit nur durch das Öffnen bzw. Verschließen der Auslauföffnungen 12 bzw. 13 mittels der Schieber 14 bzw. 15 vier Dosiermengen einstellen. Hierdurch ist es möglich, z.B. durch Abschalten einer der vier Öffnungen, beispielsweise der für den linken Außenbereich zuständigen Auslauföffnung die Arbeitsbreite links um etwa ein Viertel der Arbeitsbreite des Schleuderdüngerstreuers zu reduzieren. Bislang war es nur möglich, die Gesamtarbeitsbreite durch halbseitiges Streuen um die Hälfte zu reduzieren.

Durch die Möglichkeit der Ver- und Einstellung der Lage und Zuordnung der beiden, der Schleuderscheibe 18 zugeordneten Aufgabepunkte zueinander ist es auf einfachste Weise möglich, durch das Verschieben der Aufgabepunkte auf der Schleuderscheibe 18 das Streubild zu korrigieren. Die unabhängige Verstellung der Lage der beiden Auslauföffnungen 12 bzw. 13 gegeneinander und gegenüber der Schleuderscheibe 18 ermöglicht so beispielsweise, wenn zu viel Dünger in den Außen- oder Innenbereich der von den beiden Schleuderscheiben 18 erzeugten Streusektoren geworfen wird, die Lage des Aufgabepunktes, mit dem der Dünger auf der Schleuderscheibe 18 auftrifft, entsprechend durch die Verlagerung der Lage der jeweiligen Auslauföffnung 12 bzw. 13 auf der Schleuderscheibe 18 zu verlagern. Diese entsprechende Verlagerung des Düngemittelaufgabepunktes auf den Schleuderscheiben 18 bewirkt, daß die von den Wurfschaufeln 19 der Schleuderscheiben 18 abgeschleuderten Düngemittelpartikel wieder gleichmäßig über die zu bestreuende Fläche verteilt werden, so daß ein korrektes, gleichmäßiges Streubild entsteht. Es ergeben sich also eine Reihe von Variationsmöglichkeiten, um das Streubild zu korrigieren und zu optimieren, so daß eine gleichmäßige Düngerverteilung in der gewünschten Weise über die gewünschte Arbeitsbreite des Schleuderdüngerstreuers möglich wird. Beispielsweise läßt sich so sehr einfach durch die Reduzierung oder die Erhöhung der von den Dosierorganen 12 bzw. 13 ausgebrachten Düngermenge eine Streubildkorrektur durchführen. Es wird beispielsweise dem Aufgabepunkt, der für die Düngeranhäufung oder Düngerminderstelle verantwortlich ist, mehr oder weniger Dünger zugeführt, indem die Öffnungsweite der jeweiligen Auslauföffnung 12 bzw. 13 mittels der Schieber 14 bzw. 15 in entsprechender Weise geändert wird. Eine weitere Korrektur und Verlagerung von Düngeranhäufung bzw. Düngermangel ist durch eine entsprechende Lageänderung der Dosierorgane 12 bzw. 13 gegenüber den Schleuderscheiben 18 auf einfachste Weise möglich.

Zum Ausbringen von kleinen und kleinesten Düngerausbringmengen pro Flächeneinheit ist zur Vermeidung von Verstopfungen vorgesehen, daß nur eine Auslauföffnung 12 oder 13 pro Schleuderscheibe 18 geöffnet wird, so daß über eine größere Einstellung der anderen, noch zur Dosierung benutzten Auslauföffnung 12 oder 13 dann der Dünger der Schleuderscheibe 18 zugeführt wird. Hier ist es dann evtl notwendig, eine Streubildkorrektur zum Erzeugen eines symmetrischen Streubildes vorzunehmen, indem die Lage der noch zur Dosierung benutzten Auslauföffnung 12 oder 13 gegenüber der Schleuderscheibe 18, d.h. der Düngeraufgabepunkt auf die jeweilige Schleuderscheibe 18 verändert wird, so daß ein gleichmäßiges Streubild über die gesamte Streubreite erhalten wird.

Des weiteren kann erfindungsgemäß vorgesehen sein, daß dem Schleuderdüngerstreuer Sensoren zur Erfassung der einzelnen, von den Schleuderscheiben 18 erzeugten Streusektoren vorgesehen sind, deren aufgenommenen Meßwerte beispielsweise an eine elektronische Regeleinrichtung weitergeleitet werden. Diese elektronische Regeleinrichtung kann wiederum mit den Betätigungselementen 20 und 21 für die Schieber 14 und 15 gekoppelt sein. Weiterhin ist es denkbar, Betätigungsvorrichtungen zur Verstellung der Lage der Auslauföffnungen 12 und 13 gegenüber den Schleuderscheiben 18 zwischen dem Rahmen 1 des Schleuderdüngerstreuers und dem plattenförmigen Elementen 9 bzw. 10 vorzusehen, wobei die Betätigungsvorrichtungen zur Veränderung der Lage der Auslauföffnungen 12 und 13 gegenüber den Schleuderscheiben 18, also zur Verstellung der Düngeraufgabepunkte des aus dem Vorratsbehälter 2 durch die Auslauföffnungen 12 und 13 herausrieselnden Düngers, ebenfalls mit der elektronischen Regeleinrichtung, die beispielsweise auf dem Akkerschlepper angeordnet ist, verbunden. Durch die Koppelung der Betätigungselemente 20 und 21 für die Schieber 14 und 15 und der Betätigungsvorrichtung zur Verstellung der Lage der Auslauföffnungen 12 und 13 gegenüber den Schleuderscheiben 18 mit der elektronischen Regeleinrichtung ist es auf einfachste Weise möglich, eine automatische Veränderung der Öffnungsweite und der Lage der einer Schleuderscheibe 18 zugeordneten Auslauföffnungen zueinander zu verändern, entsprechend der von den Sensoren ermittelten Werte, so daß eine automatische Streubildkorrektur erfolgt. Somit werden während des Düngerstreuens automatisch Korrektruen möglich. Auch ist eine individuelle Verstellung per Hand vom Schleppersitz aus möglich.

Damit die sich im Vorratsbehälter 2 befindlichen Düngemittelpartikel ordnungsgemäß zu den jeweiligen Auslauföffnungen 12 bzw. 13 gelangen, ragt in jedes trichterförmige Behälterteil 4 das angetriebene Rührorgan 32 hinein.

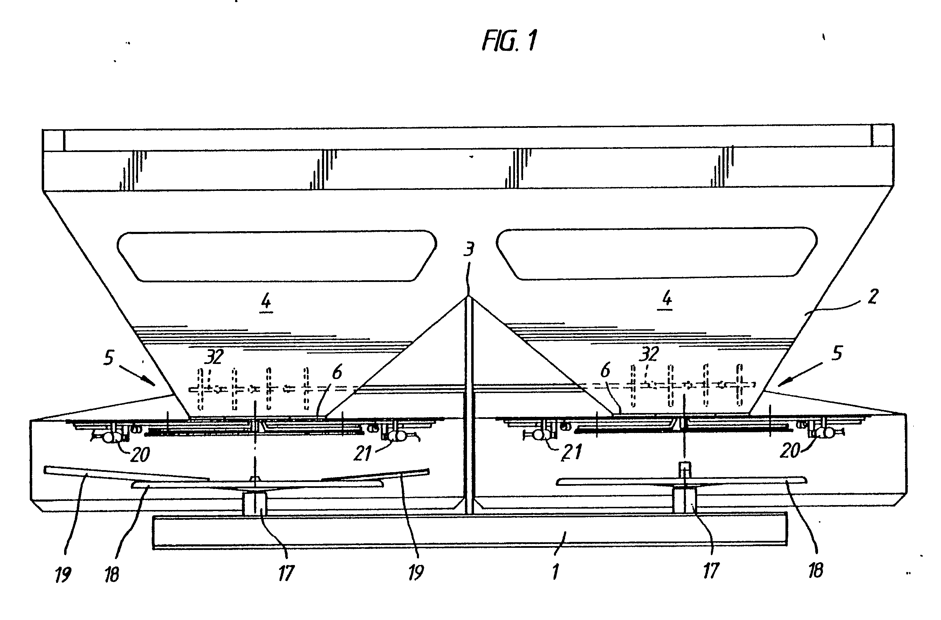

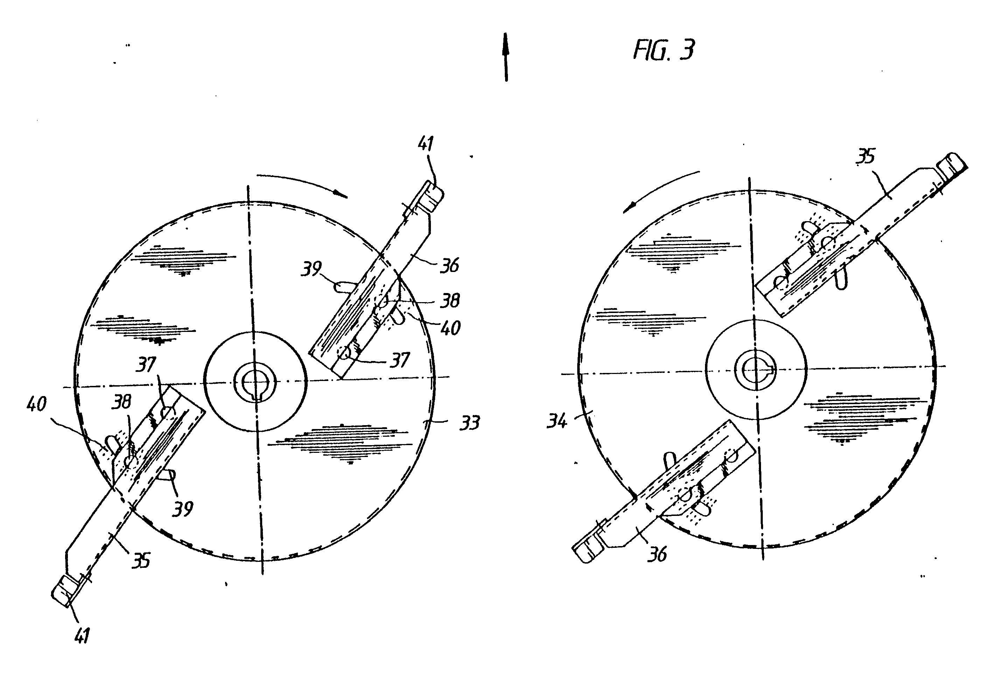

Die Fig. 3 zeigt ein Schleuderscheibenpaar mit den Schleuderscheiben 33 und 34, welche sich beispielsweise auf den Ausgangswellen der Getriebe 17 des Schleuderdüngerstreuers gemäß Fig. 1 werkzeuglos montieren lassen. Um eine noch bessere Anpassung an die jeweils auszustreuende Düngersorte bzw. die Arbeitsbreite, über welche die Düngemittel abgeschleudert werden soll, zu erreichen, weisen diese beiden Schleuderscheiben 33 und 34 die unterschiedlich lang ausgebildeten Wurfschaufeln 35 und 36 auf. Diese Wurfschaufeln 35 und 36 sind winkelverschwenkbar um den jeweiligen Bolzen 37 auf der Schleuderscheibe 33 bzw. 34 befestigt. Zur Einstellung der unterschiedlichen Stellungen der Wurfschaufeln 35 und 36 dient das jeweilige Festsetzelement 38, welches sich in dem Bereich des Langloches 39 verschwenken läßt. Die jeweilige Stellung der Wurfschaufel 35 bzw. 36 ist einer Streutabelle zu entnehmen, wobei die einzelnen Einstellpositionen exakt mittels der auf den Schleuderscheiben 33 bzw. 34 im Bereich des Langloches 39 angeordneten Einstellskala 40 einzustellen sind. Die Vorteile dieser Verstellung der Wurfschaufeln zur Streubildkorrektur sind beispielsweise in der EP-OS 02 92 873 beschrieben.

Damit sich die vorab geschilderten Vorteile hinsichtlich einer optimalen Streubildeinstellung auch auf die sog. Spätdüngung von bereits aufgewachsenen Pflanzen übertragen läßt, sind an den Wurfschaufeln 35 bzw. 36 die Schwenkschaufeln 41 in aufrechter Ebene schwenkbar angelenkt, so daß die von den Wurfschaufeln 35 bzw. 36 abgeschleuderten Düngemittelpartikel in Richtung nach oben abgeschleudert werden und weich von oben in den aufwachsenen Pflanzenbestand hinein fallen.

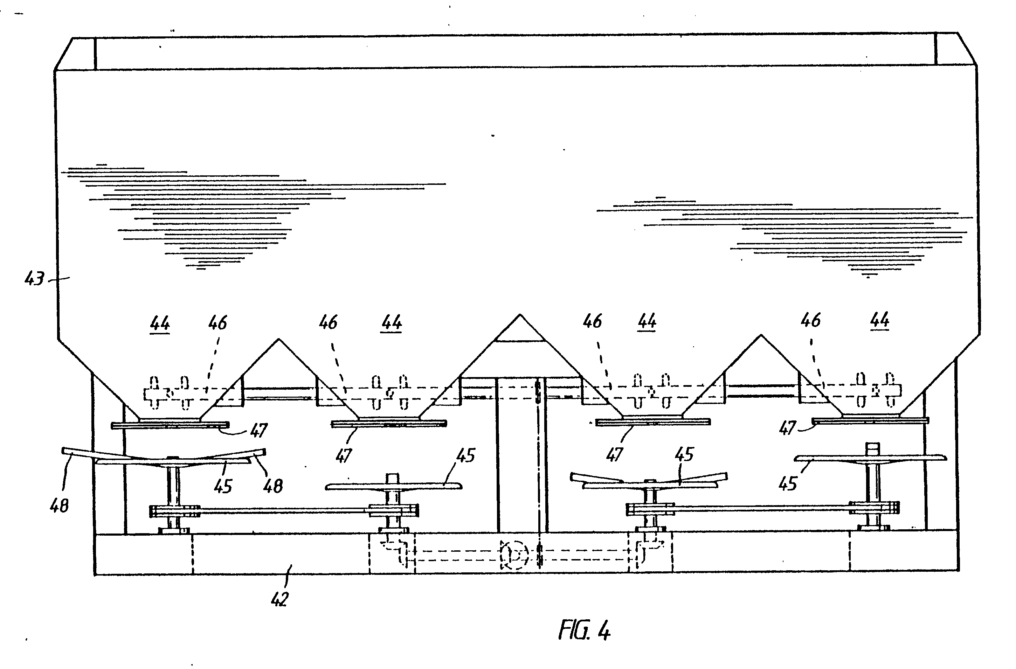

Die Fig. 4 zeigt einen Schleuderdüngerstreuer mit dem Rahmen 42 in dem der Vorratsbehälter 43 befestigt ist. Dieser Vorratsbehälter 43 weist die vier Trichterspitzen 44 auf, wobei jeder Trichterspitze 44 die Schleuderscheibe 45 zugeordnet ist. In jede Trichterspitze 44 ragt das angetriebene Rührorgan 46 hinein. Unterhalb der Trichterspitzen 44 ist jeweils das aus einer Auslauföffnung und einem diese Auslauföffnung in unterschiedlichen Öffnungsweiten einstell- und schließbaren Schieber bestehende Dosierorgan 47 angeordnet. Die aus dem Inneren des Vorratsbehälters 43 zu den Schleuderscheiben 45 in genau einstellbaren Mengen ausströmenden Düngemittelpartikel werden von den auf den Schleuderscheiben 45 angeordneten Wurfschaufeln 48 gleichmäßig über die zu bestreuende Fläche verteilt, wobei die Wurfschaufeln 48 die Düngemittelpartikel in vier lückenlos seitlich aneinander anschließenden und sich überlappende Streusektoren über die zu bestreuende Bodenoberfläche in einem gleichmäßigen Streubild verteilen. Die Schleuderscheiben 45 zugeordneten Dosierorgane 47 sind unabhängig voneinander ein- und verstellbar. Zur exakten Einstellung des Streubildes sind die Wurfschaufeln 48 winkelverschwenkbar auf den Schleuderscheiben 45 angeordnet.

Zum Ausbringen von besonders kleinen Ausbringmengen wird die Düngemittelzufuhr zu den beiden mittleren Schleuderscheiben 45 unterbrochen, indem die entsprechende Auslauföffnung mittels des Schiebers verschlossen wird, so daß nur noch den äußeren Schleuderscheiben 45 Düngemittelpartikel zugeführt werden. Hierdurch ist es dann möglich, beim Ausbringen von besonders kleinen Ausbringmengen die Öffnungsweite der den äußeren Schleuderscheiben 45 zugehörigen Auslauföffnung zu vergrößern, da ja nur noch Düngemittelpartikel aus zwei Auslauföffnungen ausgebracht werden, so daß es nicht zu Verstopfungen der Auslauföffnungen kommt, wie es evtl. beim Ausbringen der Düngemittelpartikel mittels der vier Auslauföffnungen 45 geschehen könnte, da die Öffnungsquerschnitte bei vier Auslauföffnungen logischer Weise wesentlich kleiner sind, als wenn die Düngemittelpartikel nur über zwei Auslauföffnungen den jeweiligen äußeren Schleuderscheiben 45 zugeführt werden. Zur Korrektur des Streubildes läßt sich nun selbstverständlich die jeweilige Lage der Auslauföffnung gegenüber den beiden Schleuderscheiben 45 derart verändern, daß sich die beiden Streusektoren, über welche die Düngemittelpartikel von den äußeren Schleuderscheiben 45 abgeschleudert werden, in gewünschter Weise überlappen, so daß ein Streubild gleichmäßiger Streustärke über die gesamte zu bestreuende Fläche entsteht.

Selbstverständlich ist es auch möglich, unterhalb jeder der Trichterspitzen 44 jeweils das Dosierorgan des Schleuderdüngerstreuers gemäß Fig. 1 anzuordnen, wobei sich dann sämtliche Vorteile des Zweischeibendüngerstreuers auch auf den Vierscheibenschleuderstreuer gemäß Fig. 4 übertragen lassen.

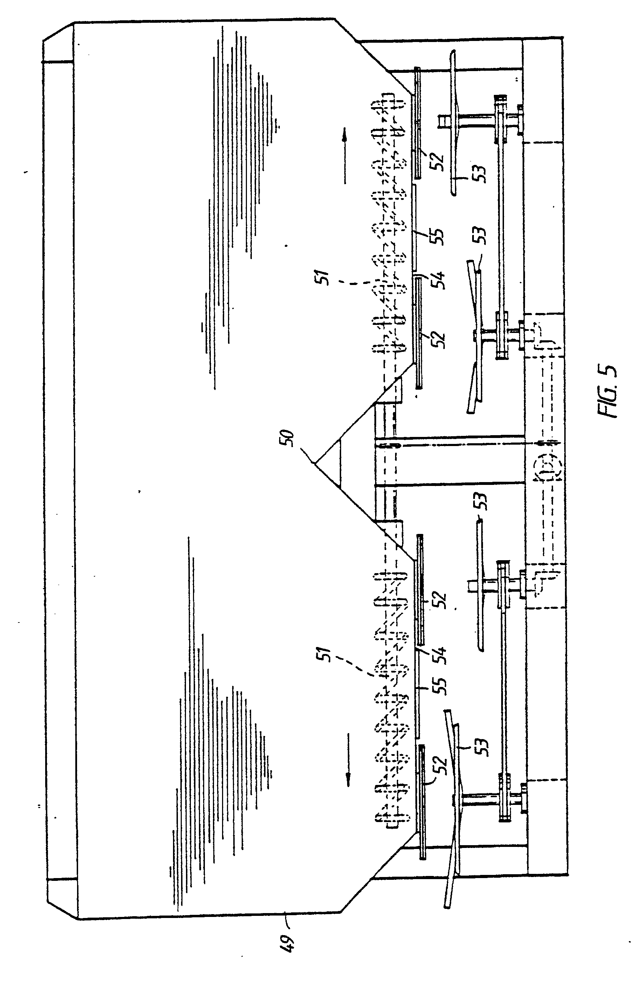

Die Fig. 5 zeigt einen Vierscheibenschleuderdüngerstreuer mit dem Vorratsbehälter 49, der in der Mitte mit dem Trenndach 50 ausgestattet ist. Innerhalb des Vorratsbehälter 49 ist die Rühr- und/oder Förderwelle 51 angeordnet, mit der der Dünger zu den Dosieröffnungen der aus den Auslauföffnungen und den Schiebern bestehenden Dosierorgane 52 gefördert wird. Die Dosierorgane 52 sind jeweils oberhalb der Schleuderscheiben 53 plaziert. In dem mittleren unteren Bereich 54 des Vorratsbehälters 49 sind jeweils zwei abdeckbare Entleerungsöffnungen 55 vorgesehen, so daß eine sehr schnelle Entleerung für im Vorratsbehälter 49 verbliebene Restmengen möglich ist.

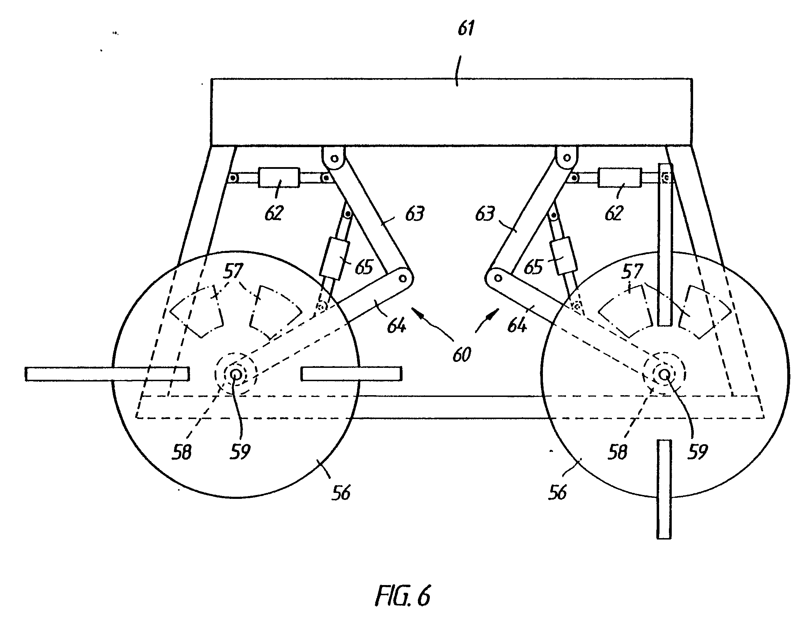

Eine weitere Möglichkeit zur Streubildkorrektur besteht darin, in dem die als Wurfelemente ausgebildeten Schleuderscheiben 56 gemäß Fig. 6 gegenüber den im Vorratsbehälterboden angeordneten Auslauföffnungen 57 verstellbar sind, so daß die Aufgabepunkte der Düngemittelpartikel auf der jeweiligen Schleuderscheibe 56 variierbar sind. Hierzu sind die Getriebe 58, auf deren Ausgangswelle 59 jeweils die Schleuderscheibe 56 befestigt ist, jeweils mittels eines verstellbaren Gelenkhebelgestänges 60 an dem Tragrahmen 61 des Schleuderdüngerstreuers in unterschiedlichen Positionen gegenüber den Auslauföffnungen 57 einstellbar, so daß sich der jeweilige Düngeraufgabepunkt der aus den Auslauföffnungen 57 herausrieselnden Düngemittelpartikel auf die jeweilige Schleuderscheibe 56 individuell einstellen läßt. Zur Einstellung des Düngeraufgabepunktes ist eine Verstelleinrichtung 62 zwischen dem Rahmen 61 des Schleuderdüngerstreuers und dem Verstellhebel 63 des Gelenkhebelgestänges 60 sowie mittels einer die Verstellhebel 63 und 64 miteinander verbindenden Verstelleinrichtung 65 erforderlich. Die Verstellung der Verstelleinrichtungen 62 und 65 kann sowohl manuell als auch automatisch erfolgen.

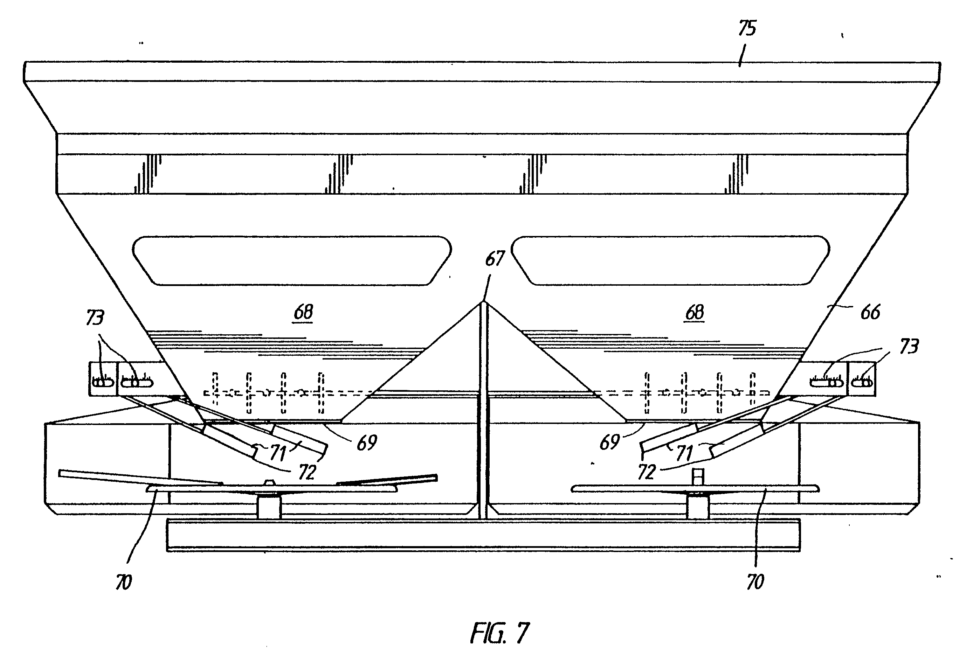

Die Fig. 7 zeigt den Schleuderdüngerstreuer mit dem Vorratsbehälter 66. Dieser Vorratsbehälter 66 ist durch das dachförmige Mittelteil 67 in die beiden trichterförmigen Behälterteile 68 aufgeteilt. Unterhalb dieser trichterförmigen Behälterteile 68 ist jeweils die Bodenplatte 69 befestigt, in der sich jeweils die beiden einer Schleuderscheibe 70 zugeordneten Auslauföffnungen angeordnet sind. Unter diesen Auslauföffnungen sind diese Auslauföffnungen in unterschiedlichen Öffnungsweiten einstellenden und verschließenden Schieber angeordnet, welche für jede Auslauföffnung unabhängig voneinander zu verstellen sind. Die mittels der Schieber in einstellbaren Mengen aus den Auslauföffnungen des Vorratsbehälters herausrieselnden Düngemittelpartikel gelangen zunächst auf die unterhalb der Auslauföffnungen angeordneten Auslaufrutschen 71 bevor sie auf die Schleuderscheiben 70 gelangen. Die Abgabeenden 72 dieser Auslaufrutschen 71 sind unabhängig voneinander gegenüber der Schleuderscheibe 70 in horizontaler Ebene verstellbar, so daß sich die Aufgabepunkte, mit dem die Düngemittelpartikel auf die Schleuderscheibe 70 auftreffen, jeweils unabhängig voneinander verstellen lassen. Diese Einstellung der Auslaufrutschen 71 erfolgt anhand der Skalen 73 und 74, wobei eine Verstellung des Aufgabepunktes in X- und Y-Richtung in horizontaler Ebene gegenüber der jeweiligen Schleuderscheibe 70 erfolgt. Jeder Auslaufrutsche 71 ist eine Auslauföffnung zugeordnet, die jeweils von einem Schieber zu verschließen und in ihrer Öffnungsweite einzustellen ist. Diese Verstellung der Schieber erfolgt unabhängig voneinander, um so die Aufgabemenge je Aufgabepunkt auf der Schleuderscheibe 70 unabhängig voneinander variieren zu können. Mittels dieser unterhalb der Auslauföffnungen des Vorratsbehälters 75 angeordneten Auslaufrutschen 71 ist es also auch möglich, eine Streubildkorrektur durch die Aufgabe von unterschiedlichen Aufgabemengen pro Auslauföffnung bzw. durch Variation der Düngeraufgabepunkte auf der Schleuderscheibe 70 vorzunehmen.

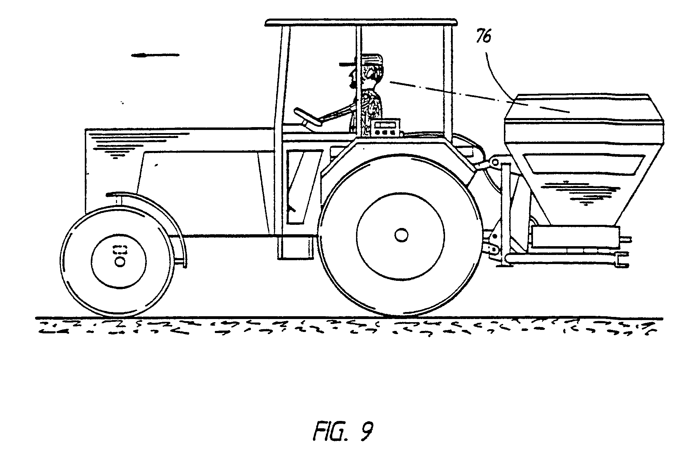

Zur Vergrößerung des Fassungsvermögens des Vorratsbehälters 66 ist auf diesen Vorratsbehälter 66 noch der Behälteraufsatz 75 aufgesetzt. Damit nun noch eine Kontrolle der exakten Funktionsweise der Dosierorgane des Schleuderdüngerstreuers durch den Schlepperfahrer erfolgen kann, ist bei mit diesem Behälteraufsatz 75 versehenen Vorratsbehälter 66 vorgesehen, daß die Frontseite 76 des Behälteraufsatzes 75 durchsichtig gestaltet wird, damit dem die Schlepperfahrer gemäß Fig. 9 die Einsicht in das Innere des Vorratsbehälters auf einfachste Weise möglich ist.

Der Schleuderdüngerstreuer weist den Rahmen 101 auf, an dem der Vorratsbehälter 102 befestigt ist. Der Vorratsbehälter 102 ist durch das dachförmige Mittelteil 103 derart unterteilt, daß die beiden trichterförmigen Behälterteile 104 entstehen. Im jeweiligen unteren Bereich 105 dieser trichterförmigen Behälterteile 104 ist die leicht auswechselbar am Trichter befestigte Grundplatte 106 angeordnet. In dieser Platte 106 ist jeweils die große Auslauföffnung 107 angeordnet. Unter der jeweiligen Platte 106 ist die Schieberplatte 108 mit den beiden Auslauföffnungen 109 beweglich gegenüber der Platte 106 um den Drehpunkt 110 verschwenkbar gelagert. An dieser Schieberplatte 108 ist der mit den Auslauföffnungen 109 zusammenwirkende Schieber 111 um die aufrechte Achse 112 verschwenkbar befestigt.

Die sich im Inneren des Vorratsbehälters 102 befindlichen Düngemittelpartikel gelangen jeweils in einstellbaren Mengen über die Auslauföffnungen 109 zu den unter diesen Auslauföffnungen 109 drehbar in den Getrieben 13 gelagerten Schleuderscheiben 114. Diese rotierend antreibbaren Schleuderscheiben 114 verteilen die ihnen zudosierten Düngemittelpartikel mittels der auf den Schleuderscheiben 114 angeordneten Wurfschaufeln 115 in exakter Weise über die zu bestreuende Bodenoberfläche. Der Antrieb der Schleuderscheiben 114 erfolgt in bekannter und daher nicht näher dargestellter Weise, beispielsweise mittels einer Gelenkwelle von der Zapfwelle des den Schleuderdüngerstreuers transportierenden Ackerschleppers und über Getriebeanordnungen. Auch können die Schleuderscheiben 114 von Ölmotoren angetrieben werden. Ebenfalls ist es möglich, daß die Schleuderscheiben 114 um quer zur Fahrtrichtung nach vorn und um nach innen geneigte Achsen 116 rotierend angetieben werden.

Die um den Drehpunkt 110 verschwenkbar an der Grundplatte 106 befestigte Schieberplatte 108 wirkt mittels des an der Schieberplatte 108 befestigten Gestänges 117 mit der die Skala 118 aufweisenden Langlochführung 119 der Grundplatte 106 zusammen. Hierdurch sind die in der Schieberplatte 108 sich befindlichen Auslauföffnungen 109 gelenkig und in genau einstellbarer Weise am Maschinenrahmen des Schleuderdüngerstreuers befestigt, so daß sich die Schieberplatte 108 gegenüber dem als Grundplatte 106 ausgebildeten Behälterboden im Bereich der Langlochführung 119 verstellen läßt.

In der Schieberplatte 108 ist das Langloch 120 mit der Einstellskala 121 angeordnet. In dem Langloch 120 ist das als Flügelschraube 122 ausgebildete Anschlagelement verstellbar befestigt, an dem der Hebelarm 123 des Schiebers 111 zur Anlage kommt. Anhand der Einstellskala 121 läßt sich die Öffnungsweite der Auslauföffnungen 109 einstellen. Das Verschließen der Auslauföffnungen 109 mittels des Schiebers 111 erfolgt mit dem als Hydraulikzylinder 124 ausgebildeten Bedienungselement.

Die Lage der Aufgabeflächen des aus den Auslauföffnungen 109 herausriesenden Düngemittelstromes auf die Schleuderscheiben 114 läßt sich im Bezug auf die Drehachse 116 der Schleuderscheiben 114 dadurch verändern, in dem die Schieberplatte 108 um den Drehpunkt 110 im Bereich des Langloches 119 verschwenkt wird. Dadurch, daß sich die Schieberplatte 108 mit ihren Auslauföffnungen 109 und der Schieber 111 relativ zueinander verschwenken lassen, ist es auch möglich, die Öffnungsquerschnitte der einzelnen Auslauföffnungen 109 unterschiedlich voneinander einzustellen. Selbstverständlich ist es auch möglich, daß die Grundplatte 106 mit der Schieberplatte 108 verbindene Gestänge 117 beispielsweise durch eine Fernbedienung in Form eines Hydraulikzylinders oder dergleichen auszutauschen, so daß ein Verschwenken der Schieberplatte 108 um den Drehpunkt 110 zur Verlagerung der Aufgabeflächen des aus den Auslauföffnungen 109 herausströmenden Düngemittelstromes auf die Schleuderscheibe 114 mittels der Fernbedienung vorzunehmen ist. Ebenso ist es auch möglich, den Anschlag 122 für den Schieber 111 über eine Fernbedienung zu verändern.

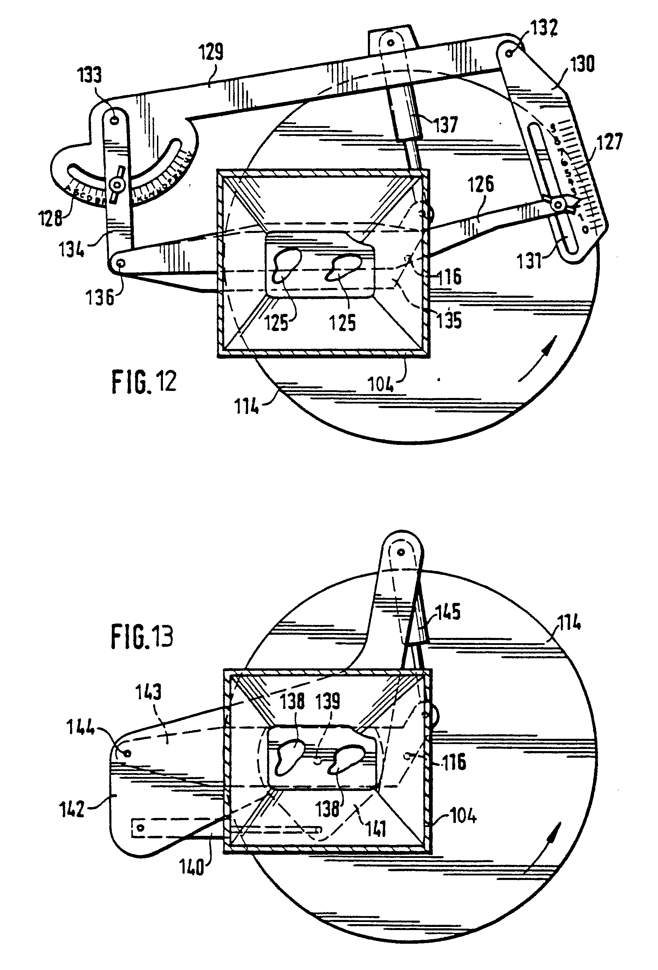

Die Fig. 13 zeigt eine weitere Möglichkeit zur Verlagerung der Aufgabeflächen der Düngemittelströme auf der Schleuderscheibe 114. Bei diesem Ausführungsbeispiel lassen sich die Auslauföffnungen 125 in ihrer Öffnungsweite unabhängig voneinander verschieden einstellen. Hierzu wird der Einstellschieber 126 über zwei voneinander unabhängige Skalen 127 und 128 eingestellt. Je nach Stellung des Einstellschiebers 126 wird das Verhältnis der Öffnungsweite der Auslauföffnungen 125 zueinander eingestellt.

Die Skala 128 befindet sich an dem fest mit dem

Maschinenrahmen 101 des Schleuderdüngerstreuers verbundenen Haltearm 129, an dem der Schwenkhebel 130, an dem die Skala 127 und das Langloch 131 befestigt sind, um die Schwenkachse 133 gegenüber dem Haltearm 129 verschwenkbar ist. Des weiteren greift an dem Haltearm 129 der um den Drehpunkt 133 verschwenkbare, und mit der Skala 128 zusammenwirkende Hebelarm 134 an. An diesem Hebelarm 134 ist sowohl der Einstellschieber 126 als auch der Schieber 135 zum Öffnen und Schließen der Auslauföffnungen 125 jeweils verschwenkbar um die Schwenkachse 136 mit dem Hebelarm 134 verbunden. Das Öffnen und Schließen der Auslauföffnungen 125 erfolgt mittels des Schiebers 135 bei Betätigung des an dem Haltearm 135 angreifenden, als Hydraulikzylinder ausgebildeten Bedienungselementes 137.

Wird nun der Hebelarm 134 um den Drehpunkt 133 beispielsweise von B nach E verschwenkt, dann wird bei Verstellung nach Skala 127 die rechte Auslauföffnung 125 schneller größer als die linke Auslauföffnung 125, also wird mehr Dünger aus der rechten Auslauföffnung fließen als aus der linken, wodurch der äußere Bereich des von der Schleuderscheibe 114 bestreuten Streusektors mehr mit Dünger versorgt wird als der innere Bereich des Streusektors.

Die Fig. 14 zeigt eine weitere Möglichkeit zur Verlagerung der Lage der Auslauföffnungen 138 gegenüber der Drehachse 116 der Schleuderscheibe 114. Hierbei werden die Auslauföffnungen 138 um den Drehpunkt 139 mittels der Fernbedienungsvorrichtung 140, welche zwischen der Platte 141, in der die Auslauföffnungen 138 angeordnet sind und der Platte 142 des Behälterbodens angreift. An dieser Platte ist ebenfalls der die Auslauföffnungen 138 in unterschiedliche Öffnungsweiten einstellende und verschließende Auslaufschieber 143 befestigt, welcher um den Drehpunkt 144 mittels der Fernbedienungsvorrichtung 145 für die unterschiedlichen Öffnungsweiten der Auslauföffnungen 138 und zum Verschließen dieser Auslauföffnungen 138 zu verschwenken ist.

## Ansprüche

1. Schleuderdüngerstreuer mit Vorratsbehälter, in dessen unteren Bereich mehrere Dosierorgane angeordnet sind, unter denen sich zumindest zwei oder mehrere gradzahlige rotierend angetriebene Schleuderscheiben mit Wurfschaufeln befinden, denen von den Dosierorganen die sich im Vorratsbehälter befindlichen Düngemittelpartikel in vorbestimmter und einstellbarer Weise auf zumindest zwei vorbestimmte Stellen (sog. Aufgabepunkten) pro Scheibe aufgegeben werden, dadurch gekennzeichnet, daß die Lage und Zuordnung der mehreren, einer Scheibe (18,45) zugeordneten Aufgabepunkte (12,13) zueinander veränderbar und unabhängig voneinander einstellbar ist.

2. Schleuderdüngerstreuer nach Anspruch 1, dadurch gekennzeichnet, daß die Lage und Zuordnung der Dosierorgane (12,13) zueinander in unabhängiger Weise verstellbar sind.

3. Schleuderdüngerstreuer nach einem oder mehreren der vorstehenden Ansprüche, dadurch gekennzeichnet, daß jeder Schleuderscheibe (18,45) zumindest zwei Dosierorgane (12,13) zugeordnet sind, deren Lage zueinander sowie die von ihnen dosierte Düngermenge unabhängig voneinander verstellbar ist.

4. Schleuderdüngerstreuer nach einem oder mehreren der vorstehenden Ansprüche, dadurch gekennzeichnet, daß die Dosierorgane (12,13) als im unteren Bereich (5) bzw. Behälterboden (6) des Behälters (2) angeordnete und über Schieber (14,15) in ihrer Öffnungsweite einstellbare Auslauföffnungen (12,13) sind.

5. Schleuderdüngerstreuer nach einem oder mehreren der vorstehenden Ansprüche, dadurch gekennzeichnet, daß die Auslauföffnungen (12,13) in unterhalb des Behälterbodens (6) gegenüber dem Behälterboden (6) verschieb- oder verschwenkbare plattenförmigen Elementen (9,10) angeordnet sind, welche unabhängig voneinander verstellbar und/oder einstellbar sind.

6. Schleuderdüngerstreuer nach einem oder mehreren der vorstehenden Ansprüche, dadurch gekennzeichnet, daß an den plattenförmigen Elementen (9,10), in denen die Auslauföffnungen (12,13) angeordnet sind, die die Öffnungsweite der Auslauföffnungen (12,13) bestimmenden sowie diese verschießenden Schieber (14,15) angeordnet sind.

7. Schleuderdüngerstreuer nach einem oder mehreren der vorstehenden Ansprüche, dadurch gekennzeichnet, daß die die Schieber (14,15) betätigenden Betätigungselemente (20,21) zwischen den Schiebern (14,15) und den die Auslauföffnungen (12,13) aufweisenden plattenförmigen Elemente (9,10) angeordnet sind.

8. Schleuderdüngerstreuer nach einem oder mehreren der vorstehenden Ansprüche, dadurch gekennzeichnet, daß die Wurfschaufeln (19,35,48) auf den Schleuderscheiben (18,35,36) winkelverschwenkbar und in unterschiedlichen Stellungen feststellbar angeordnet sind.

9. Schleuderdüngerstreuer nach einem oder mehreren der vorstehenden Ansprüche, dadurch gekennzeichnet, daß bei kleinen Ausbringmengen nur eine Auslauföffnung (12,13) geöffnet wird, so daß über eine größere Einstellung der anderen Auslauföffnung (12,13) dann der Dünger der Schleuderscheibe (18,33,34,45) zugeführt wird.

10. Schleuderdüngerstreuer nach einem oder mehreren der vorstehenden Ansprüche, dadurch gekennzeichnet, daß der Vorratsbehälter (43) in mehrere Trichterspitzen (44) unterteilt ist, wobei jeweils einer Schleuderscheibe (45) eine Trichterspitze (44) zugeordnet ist.

11. Schleuderdüngerstreuer nach einem oder mehreren der vorstehenden Ansprüche, dadurch gekennzeichnet, daß im unteren Bereich des Vorratsbehälters (2,43) ein Rühr-und/oder Förderorgan (32,46) angeordnet ist.

12. Schleuderdüngerstreuer nach einem oder mehreren der vorstehenden Ansprüche, dadurch gekennzeichnet, daß jeweils unterhalb der Auslauföffnungen Auslaufrutschen oder -trichter (71) oder ähnliches angeordnet sind, und daß die Abgabeenden (72) dieser Elemente (71) unabhängig voneinander gegenüber der Schleuderscheibe (70) in horizontaler Ebene verstellbar sind.

13. Schleuderdüngerstreuer nach einem oder mehreren der vorstehenden Ansprüche, dadurch gekennzeichnet, daß die Rutschen (71) anhand von Skalen (73,74) oder Markierungen oder ähnliches einstellbar sind.

14. Schleuderdüngerstreuer nach einem oder mehreren der vorstehenden Ansprüche, dadurch gekennzeichnet, daß jeder Auslauföffnung (12,13,47,52,57,69) ein Schieber (14,15) zugeordnet ist, daß die jeder Auslauföffnung (12,13,47,52,57,69) zugeordneten Schieber (14,15) unabhängig voneinander verstellbar sind, um so die Aufgabemenge je Aufgabepunkt unabhängig voneinander variieren zu können.

15. Schleuderdüngerstreuer nach einem oder mehreren der vorstehenden Ansprüche, insbesondere Anspruch 14, dadurch gekennzeichnet, daß die einer Scheibe (18,33,34,45,53,56,70) zugeordneten Schieber (14,15) in Abhängigkeit derart voneinander verstellbar sind, daß die Größe der Auslauföffnungen (12,13,47,52,57,69) unterschiedlich einzustellen ist, wobei jedoch bei der Verstellung der Schieber (14,15) die Summe der an sich vorgesehenen Ausbringmenge bzw. die Summe des freigegebenen Querschnittes gleich der Summe der Querschnitte bei gleichgroßer Einstellung der Auslauföffnungen (12,13,47,52,57,69) ist.

16. Schleuderdüngerstreuer nach einem oder mehreren der vorstehenden Ansprüche, dadurch gekennzeichnet, daß die Auslauföffnungen (12,13,47,52) in dem Boden des Vorratsbehälters (2,43,49) gegenüber der Drehachse der Schleuderscheibe (18,33,34,45,53) bzw. den Schleuderscheiben verstellbar sowie die Auslauföffnungen (12,13,47,52) zueinander verstellbar und in unterschiedlichen Positionen zueinander einstellbar sind.

17. Schleuderdüngerstreuer nach einem oder mehreren der vorstehenden Ansprüche, dadurch gekennzeichnet, daß die Schleuderscheiben (56) jeweils gegenüber den Auslauföffnungen (57) in horizontaler Ebene in zwei sich überlagernden Bewegungsrichtungen verstellbar sind.

18. Schleuderdüngerstreuer nach einem oder mehreren der vorstehenden Ansprüche, dadurch gekennzeichnet, daß das Getriebe (58) der Schleuderscheibe bzw. die Lagerung der Schleuderscheiben (56) mittels eines Kniehebelgelenkes (60) am Rahmen (61) des Schleuderdüngerstreuers befestigt ist.

19. Schleuderdüngerstreuer nach einem oder mehreren der vorstehenden Ansprüche, dadurch gekennzeichnet, daß die Lagerung oder das Getriebe (58) der Schleuderscheibe (56) in X- und Y-Richtung in horizontaler Ebene verstellbar am Rahmen (61) des Schleuderdüngerstreuers angeordnet ist.

20. Schleuderdüngerstreuer, dadurch gekennzeichnet, daß die einer Schleuderscheibe (114) zugeordneten Dosierorgane als im unteren Bereich bzw. Behälterboden des Behälters (102) angeordnete und über Schieber (111,135,143) in ihrer Öffnungsweite einstellbare Auslauföffnungen (109,125,138) ausgebildet sind, wobei die Auslauföffnungen (109,125,138) in einer gemeinsamen Platte (108,141) angeordnet sind und in ihrer Lage zur Drehachse (116) der Schleuderscheibe (114) verstellbar sind.

21 Schleuderdüngerstreuer nach Anspruch 1 und/oder 20, dadurch gekennzeichnet, daß die Lage der in der gemeinsamen Platte (8,41) angeordneten Auslauföffnungen (9,38) gleichzeitig, aber in unterschiedlicher Weise in Bezug auf die Drehachse (16) der Schleuderscheibe (14) verstellbar ist.

22. Schleuderdüngerstreuer nach Anspruch 1 oder 20 , dadurch gekennzeichnet, daß die Platte (108,141), in der die Auslauföffnungen (109,138) angeordnet sind, gelenkig über einen oder mehrere Hebel (117,126,129,140) am Maschinenrahmen (1) befestigt ist, wobei die Hebel (117,126,129,140) gemeinsam mit der Platte (108,141) gegenüber dem Behälterboden verstellbar sind.

23. Schleuderdüngerstreuer nach Anspruch 1 oder 20, dadurch gekennzeichnet, daß die Platte (108,141) drehbar oder verschwenkbar gegenüber der Drehachse (116) der Schleuderscheibe (114) am Behälterboden befestigt ist.

24. Schleuderdüngerstreuer nach einem oder mehreren der vorstehenden Ansprüche, dadurch gekennzeichnet, daß die Platte (108,141), in der die Auslauföffnungen (109,125,138) bzw. ein zusätzlicher Schieber (135) vorgesehen ist, über zwei voneinander unabhängige Skalen (118,121,127,128) einstellbar ist, so daß die Lage der Auslauföffnungen (109,125,138) in Bezug auf die Schleuderscheibe (114) verstellbar ist.

25. Schleuderdüngerstreuer nach einem oder mehreren der vorstehenden Ansprüche, dadurch gekennzeichnet, daß die mehreren jeder Schleuderscheibe (114) zugeordneten Auslauföffnungen (109,125,138) gemeinsam verstellbar sind.

26. Schleuderdüngerstreuer nach einem oder mehreren der vorstehenden Ansprüche, dadurch gekennzeichnet, daß die Verstellung der Auslauföffnungen (109,125,138) bzw. die Verstellung der Lage der Aufgabeflächen über eine Fernbedienung (Bowdenzug, Hydraulikzylinder, Elektromotor etc.) erfolgt.

27. Schleuderdüngerstreuer nach Anspruch 1, 20 oder 25, dadurch gekennzeichnet, daß die Fernbedienung mit einem Computer verbunden ist, welcher die Einstellung sowie das Streuergebnis erfaßt und entsprechend die Einstellung des Schleuderstreuers regelt.

28. Schleuderdüngerstreuer nach einem oder mehreren der vorstehenden Ansprüche, dadurch gekennzeichnet, daß die Schleuderscheibe (114) um aufrechte, in bevorzugter Weise senkrechte Achsen (116) rotiert.

29. Schleuderdüngerstreuer nach einem oder mehreren der vorstehenden Ansprüche, dadurch gekennzeichnet, daß die Schleuderscheiben (114) um zur Fahrtrichtung nach vorn und um nach innen geneigte Achsen rotiert angetrieben werden.

# FIG. 1

FIG. 2

2

3

22  16  14  12  7  13  15  16  23

26  27

24  25

28  29

20  21

9  30  31  10

6  8  18

10'  9'

11

EP 0 392 288 A2

FIG. 3

EP 0 392 288 A2

FIG. 4

EP 0 392 288 A2

FIG. 5

EP 0 392 288 A2

*FIG. 6*

EP 0 392 288 A2

FIG. 7

EP 0 392 288 A2

FIG. 8

FIG. 9

FIG. 10

FIG. 11

EP 0 392 288 A2

FIG.12

FIG.13